# FASCICULE DE BREVET EUROPEEN

(11) **EP 3 152 410 B1**
(45) Date de publication et mention de la délivrance du brevet: **15.04.2020**
(21) Numéro de dépôt: 15732053.2
(22) Date de dépôt: 05.06.2015
(51) Int. Cl.: F01K 9/00, F01K 25/08, F22B 1/00, F28B 1/06, F28B 9/06, F28D 20/00

(54) **INSTALLATION DE CONVERSION DE CHALEUR EN ENERGIE MECANIQUE A SYSTEME DE REFROIDISSEMENT DU FLUIDE DE TRAVAIL AMELIORE**
KRAFTWERK ZUR UMWANDLUNG VON WÄRME IN MECHANISCHE ENERGIE MIT VERBESSERTEM ARBEITSFLUIDKÜHLSYSTEM
PLANT FOR CONVERTING HEAT INTO MECHANICAL ENERGY COMPRING AN IMPROVED WORKING FLUID COOLING SYSTEM

(30) Priorité: 05.06.2014 FR 1455121
(43) Date de publication de la demande: 12.04.2017
(73) Titulaire: Commissariat à l'Énergie Atomique et aux Énergies Alternatives, 75015 Paris (FR)
(72) Inventeur: BRUCH, Arnaud, 69560 Saint-Colombe (FR); COUTURIER, Raphaël, F-38360 Sassenage (FR)
(74) Mandataire: Nony
(86) Numéro de dépôt international: PCT/IB2015/054260
(87) Numéro de publication internationale: WO 2015/186100

(56) Documents cités:
- EP-A1- 2 436 886
- EP-A1- 2 447 479
- WO-A1-2012/151477
- US-A1- 2009 072 537

## Description

### Domaine technique

La présente invention concerne un réservoir de stockage de froid qui permet d'utiliser un échangeur de chaleur (par exemple un aéro-condenseur sec (sans eau) ou un aéroréfrigérant) dans un système thermodynamique avec une efficacité améliorée par forte chaleur en diminuant la température de l'air en entrée de l'échangeur.

Bien que l'invention soit particulièrement adaptée à une centrale solaire à concentration, de par son lieu d'implantation potentiel, comme décrit ci-après, elle peut tout aussi bien être mise en œuvre sur toute installation de conversion de la chaleur en énergie mécanique et en particulier après en électricité, une telle installation de conversion en électricité utilisant une turbine de détente et donc, un condenseur afférent.

### Etat de la technique

La technologie solaire thermique à concentration consiste à concentrer le rayonnement solaire à l'aide de miroirs pour chauffer un fluide caloporteur servant de source chaude dans un cycle thermodynamique. La concentration permet d'atteindre des températures plus ou moins élevées et ainsi de bénéficier de rendements de conversion thermodynamiques plus ou moins importants.

Les technologies développées se distinguent par leur méthode de concentration des rayons solaires, de transport (et éventuellement de stockage) de la chaleur (fluides caloporteurs) et de conversion thermodynamique (turbines à vapeur, turbines à gaz, moteurs Stirling).

On distingue typiquement quatre grandes familles de centrales solaires thermique à concentration (encore appelée centrales solaires thermodynamique à concentration ou centrales héliothermodynamiques, d'acronyme anglais CSP pour *« Concentrating Solar Power Plant"*) : les systèmes à collecteurs de forme cylindro-parabolique à foyer linéaire, ceux à concentrateurs linéaires de Fresnel, les systèmes à tour à récepteur central et enfin, les systèmes à paraboles à foyer mobile.

Une centrale CSP est une centrale qui concentre les rayons du soleil à l'aide de miroirs pour chauffer un fluide caloporteur. Ce fluide sert de source chaude à une turbine de détente qui entraine un alternateur afin de produire de l'électricité.

On décrit maintenant un exemple d'une centrale CSP de type cylindro-parabolique déjà installée, notamment en Espagne à Andasol d'une puissance de 50MWe.

Dans cette centrale, l'huile thermique est chauffée dans une zone constituée d'une pluralité de rangées de miroirs de forme cylindro-parabolique regroupés en ce que l'on appelle communément un « champ solaire ». La chaleur de l'huile est soit stockée dans un fluide de stockage qui est typiquement dans le cas de ces centrales de type cylindro-parabolique un mélange de sels de nitrates fondus, soit envoyée dans les échangeurs de chaleur pour produire directement de la vapeur. Cette vapeur est détendue dans une turbine pour produire de l'électricité.

En sortie de turbine de détente, la vapeur est condensée par un aérocondenseur utilisant comme source froide l'air extérieur ou de l'eau. La vapeur condensée retourne ensuite dans les échangeurs pour à nouveau être évaporée puis envoyée dans la turbine de détente.

Dans une telle configuration, il peut donc exister deux circuits de fluide distincts, à savoir celui du fluide de travail intégrant la turbine de détente et relié au travers d'échangeurs de chaleur au circuit principal d'huile thermique et celui de refroidissement du condenseur du circuit intégrant la turbine de détente.

Le rendement de la turbine de détente est directement lié à la température d'entrée de la vapeur et la température du point bas du cycle, c'est-à-dire la température au condenseur.

La turbine de détente, en tant qu'organe de conversion thermodynamique, est limitée par le rendement théorique de Carnot selon l'équation n = 1 - T_{froide}/T_{chaude} avec T en Kelvin. Ainsi, le rendement théorique d'une turbine de détente dépend de la température de la source chaude mais aussi de celle de la source froide.

Donc, pour une température chaude donnée qui dépend des récepteurs solaires dans le cas d'une centrale CSP, ou d'une chambre de combustion dans le cas d'une centrale à gaz ou à charbon, plus la température froide (température au condenseur) est élevée, plus le rendement de la turbine de détente baisse.

Dans le cas d'une centrale CSP, l'implantation est réalisée préférentiellement dans une région à fort ensoleillement qui peut donc présenter des températures élevées en journée. Une solution simple pour la source froide est de puiser de l'eau dans une rivière ou dans la nappe phréatique mais c'est une ressource rare dans les régions désertiques ou arides. Les nappes phréatiques sont par exemple quaternaires en Afrique. De plus, même quand elle existe, cette source froide est de plus en plus difficile et chère à exploiter en raison des réglementations environnementales. En outre, le traitement de l'eau puisée est coûteux et nécessite un approvisionnement régulier en produits chimiques.

La publication [1] évoque très largement cette problématique. En particulier, il est investigué dans cette publication quatre lieux d'implantation possible de centrales CSP en Afrique avec les températures moyennes actuelles et prévues dans les années à venir. Il ressort de cette investigation que le réchauffement annoncé de la planète affectera particulièrement les régions déjà considérées chaudes, notamment les lieux d'implantation envisagés pour les centrales CSP.

Dans ces conditions, le besoin en refroidissement de ces centrales CSP risque d'être crucial.

On peut se reporter à la publication [2] dans laquelle une présentation des différentes technologies de refroidissement de centrales de production électrique est réalisée.

Quatre technologies sont majoritairement utilisées dont on décrit brièvement le fonctionnement maintenant.

Les systèmes de refroidissement humide dit « ouvert » prélèvent dans un fleuve ou une mer, un volume d'eau qui réalise le refroidissement de la vapeur dans le condenseur. L'eau est ensuite rejetée en aval du prélèvement, à plus haute température, directement dans le fleuve ou la mer. A titre indicatif, l'ordre de grandeur du volume d'eau requis qui est prélevé est environ égal à 160 litres/kWhe (kiloWatt heure électrique), avec aucune eau évaporée.

Les systèmes de refroidissement humide dit « fermé » permettent de réduire de façon importante les prélèvements d'eau externe car, le refroidissement de l'eau circulant dans ce circuit est lui-même assuré par la présence de tours réfrigérantes. L'eau consommée correspond à l'appoint nécessaire pour maintenir le niveau du circuit fermé constant alors qu'une partie de l'eau est évaporée à travers les tours réfrigérantes. A titre indicatif également, l'ordre de grandeur du volume d'eau requis est de 6 litres/kWhe dont 2 litres/kWhe correspondent à la partie évaporée.

Les systèmes de refroidissement à l'air comportent un circuit supplémentaire, qui est intermédiaire entre le condenseur de la turbine de détente et l'échangeur. La quantité d'eau consommée est diminuée de 95% par rapport aux systèmes de refroidissement humide ouvert, la consommation résiduelle servant aux purges et pour les fuites. A titre d'exemple, une centrale CSP cylindro-parabolique actuellement en service dans le désert de Californie avec un système de refroidissement humide consomme environ 3litres/kWhe (kiloWatt heure-électrique). Avec un système de refroidissement à air, la consommation est diminuée à une valeur de 3 à 3,4 litres/kWhe, dont 0,75 litre/kWhe pour le nettoyage des miroirs.

Par contre, les inconvénients d'un système de refroidissement à air sont nombreux. En effet, le coût d'investissement est bien supérieur à celui pour les systèmes de refroidissement humide, le bruit généré est important, le rendement est affecté de manière importante lorsqu'il fait chaud, la consommation électrique est importante et enfin, l'emprise au sol est également importante.

Les systèmes de refroidissement dit « hybride » combinent sous diverses formes, un système de refroidissement à air avec aspersion d'eau. L'utilisation d'eau en aspersion permet d'améliorer l'efficacité de l'aérocondenseur lorsqu'il fait chaud dans l'environnement extérieur. La consommation d'eau est inférieure à celle des systèmes de refroidissement humide.

Dans un système de refroidissement sans eau ou avec très peu d'eau, on utilise soit un aérocondenseur dit sec, dans lequel la vapeur provenant de la turbine de détente est condensée, soit un aéroréfrigérant dit sec qui refroidit un fluide de transfert, souvent de l'eau glycolée, qui assure la condensation de la vapeur provenant de la turbine à l'intérieur du condenseur.

L'architecture est la même pour les aéroréfrigérants et les aérocondenseurs avec des tuyauteries d'alimentation et de retour de la vapeur ou du fluide de transfert et des ventilateurs qui font circuler l'air ambiant. Les ventilateurs sont agencés à quelques mètres du sol pour laisser un passage d'air suffisant afin ne pas créer de perte de charge et éviter d'aspirer des poussières.

Une possibilité pour le refroidissement d'une centrale CSP est donc d'utiliser un système de refroidissement utilisant directement l'air ambiant comme source froide au travers d'un aérocondenseur sec. Ainsi, dans un tel système, on utilise l'air ambiant pour dissiper la chaleur résiduelle de la turbine de détente qui correspond à environ 65 à 85% de la chaleur produite par les récepteurs solaires suivant le rendement de conversion qui va d'environ 15% pour les turbines de détente des machines thermiques à cycle de Rankine de petites dimensions, jusqu'à environ 35% pour les turbines à vapeur de grandes dimensions. Un système de refroidissement à aérocondenseur sec est mis en oeuvre par exemple par la société Novatec sur des centrales CSP à concentrateurs linéaires de Fresnel.

Comme déjà évoqué, l'avantage principal d'un tel système est l'économie en eau. Les inconvénients majeurs sont le coût en énergie consommée qui est dédiée à l'alimentation électrique des ventilateurs et, la perte de rendement de la centrale lorsque la température de l'air extérieur dépasse 30 à 35°C.

Le passage d'un système de refroidissement humide à un système de refroidissement à air représente une perte équivalente à 3% de l'énergie électrique annuelle produite en Espagne, et à une valeur de 5 à 10% en Afrique du Nord, selon la publication [1].

Une autre source d'information estime, quant à elle, à 10% le surcoût de production électrique pour un système de refroidissement à air, et à 7% de perte de l'énergie produite: publication [3].

Un système de refroidissement hybride permet de limiter à 1% la perte d'énergie produite pour une consommation d'eau de l'ordre de 50% de celle d'un système humide.

La pénalité induite par un système de refroidissement avec aérocondenseur sec, c'est-à-dire la perte d'énergie produite due à son fonctionnement, est la plus importante en journée lorsqu'il fait très chaud à l'extérieur, ce qui correspond malheureusement aux périodes de fort ensoleillement, donc de fortes productions électriques, et donc de forts besoins de refroidissement au condenseur de la turbine de détente.

Une des solutions envisageables pour évacuer la pleine puissance thermique au condenseur de la machine thermique de conversion de la chaleur en électrique, dans des cas de température extérieure très élevée, est de surdimensionner les aéro-condenseurs à air, c'est-à-dire installer des appareils calibrés pour évacuer cette pleine puissance thermique dans le cas le plus extrême correspondant aux températures élevées les plus extrêmes. Les inconvénients majeurs de cette solution sont le coût d'investissement très conséquent et la consommation électrique des ventilateurs toute l'année alors que les moments où il fait très chaud sont limités en temps.

D'autres systèmes de refroidissement des condenseurs des machines de conversion électrique des centrales solaires sont actuellement envisagés, même s'ils restent plus aujourd'hui encore à l'état d'étude et/ou de prototype. On peut citer l'exemple de systèmes basés sur l'utilisation d'un fluide caloporteur dessicant entre le condenseur et l'air ambiant : voir publication [4]. Ce type de système présente des performances supérieures à celles de systèmes classiques de refroidissement à l'air et permet une fonction naturelle de stockage basée sur le principe d'un fluide dessicant et les variations de température de l'air extérieur.

Par ailleurs, d'autres systèmes de refroidissement ont déjà été proposés.

Ainsi, la demande de brevet US 2009/0158736 propose un système où l'on utilise le sol comme source froide, un échangeur étant alors noyé dans le sol. Les inconvénients du système divulgué sont nombreux, et on peut les énumérer comme suit :
- des longueurs de tuyauterie importantes sont nécessaires pour assurer l'échange de chaleur avec le sol, ce qui représente un coût financier et énergétique et induit une maintenance importante,
- le transfert de chaleur est peu performant,
- la régénération thermique du sol, c'est à dire le retour du sol à une configuration thermique initiale, avant l'échange de chaleur, n'est pas assurée en raison de la faible conductivité thermique du sol. Dans ce cas, l'efficacité de la source froide que représente le sol tend à se dégrader au fur et à mesure de son utilisation.

La demande de brevet US 2009/072537 divulgue un cycle Rankine utilisant l'humidité ambiante pour générer de l'énergie. Dans un mode de réalisation, il est suggéré l'utilisation d'échangeurs à air refroidi par un lit de roche afin de condenser et/ou refroidir le fluide sortant de la turbine.

Du brevet US4054246, on connaît en outre des systèmes qui stockent la chaleur du soleil pendant l'été ou le froid du sol dans un lit de roches agencé sous une habitation.

Au lieu de réaliser des systèmes de refroidissement des condenseurs des machines thermiques de conversion électrique, d'autres solutions consistent plutôt à évacuer une partie de la puissance thermique de la turbine de détente, i.e. en amont du condenseur.

La publication [5] envisage ainsi un système qui combine une machine à absorption pour la production de froid, un stockage de fluide froid puis la restitution du froid stocké à l'air en entrée d'aérocondenseur par l'intermédiaire d'un échangeur. Le système de refroidissement envisagé présente plusieurs inconvénients majeurs que l'on peut résumer ainsi :
- le système est particulièrement complexe puisqu'il couple plusieurs composants et machines,
- la consommation d'énergie électrique est particulièrement élevée dans la mesure où la machine à absorption et les circuits ajoutés doivent tous être alimentés,
- la mise en place d'un tel système nécessite un grand volume de stockage.

La publication [6] propose quant à elle un stockage par matériau à changement de phase (d'acronyme MCP en français ou PCM en anglais) pour décaler l'évacuation d'une partie de la puissance thermique de la turbine de détente. Le stockage proposé est cher de réalisation et compliqué à mettre en œuvre, notamment de par l'ajout d'un échangeur supplémentaire.

Ainsi, il existe un besoin pour améliorer le rendement du système de refroidissement du condenseur d'une installation de conversion de chaleur en électricité, en cas de températures extérieures très élevées. En d'autres termes, il existe un besoin pour maintenir les performances nominales d'un condenseur d'une installation de conversion de chaleur en électricité, en cas de températures extérieures très élevées.

Plus généralement, il existe un besoin pour améliorer le rendement d'une installation de conversion de chaleur en énergie mécanique et en particulier après en électricité, en particulier d'une centrale solaire thermodynamique (CSP) intégrant une telle installation, en cas de températures extérieures très élevées.

Le but général de l'invention est de répondre au moins en partie à ce(s) besoin(s).

### Exposé de l'invention

Pour ce faire, l'invention a tout d'abord pour objet, selon un aspect, une installation de conversion de chaleur en énergie mécanique comprenant :
- une machine thermique apte à fonctionner selon un cycle thermodynamique, la machine thermique comprenant une turbine de détente de vapeur et un condenseur pour le refroidissement de la vapeur détendue,
- un système de refroidissement de la vapeur détendue du fluide de travail, c'est-à-dire du condenseur de la machine thermique, comprenant un aérocondenseur et/ou un aéroréfrigérant et un réservoir de matériau de stockage thermique par chaleur sensible, en tant que moyen de stockage du froid pour l'aérocondenseur et/ou l'aéroréfrigérant, le réservoir étant apte à être mis en communication avec l'air extérieur lors des heures où la température extérieure est la plus froide afin de stocker le froid de l'air extérieur.

Le réservoir est réalisé sous la forme d'une fosse dans le sol agencée en dessous de l'échangeur de chaleur, la fosse étant reliée à l'air extérieur par au moins un conduit.

L'échange de chaleur entre le réservoir et l'air extérieur est réalisé par circulation de l'air au travers du matériau de stockage. Par ce mécanisme, le froid peut être stocké par échange entre l'air et le matériau puis restituer en cas de besoin.

Par « aérocondenseur », on entend ici et dans le cadre de l'invention, un échangeur de chaleur dans lequel un fluide sous forme vapeur, circule et est condensé avec l'air ambiant pulsé par un ventilateur.

Par « aéroréfrigérant », on entend un échangeur de chaleur dans lequel un fluide liquide ou gazeux est refroidi par un courant d'air extérieur pulsé par un ventilateur.

Selon un mode de réalisation avantageux, la machine thermique est une machine à cycle organique de Rankine (ORC).

L'invention consiste donc en la récupération et le stockage du froid de la nuit dans un réservoir de matériau de stockage pour une utilisation ultérieure à un moment souhaité par l'exploitant de l'installation, afin de refroidir l'air entrant dans l'échangeur de chaleur du système de refroidissement du fluide de travail de la machine thermique.

Ainsi, on peut conserver les performances nominales d'un échangeur de chaleur (en particulier l'aérocondenseur ou l'aéroréfrigérant), même en cas de très fortes chaleurs, et ce sans avoir à surdimensionner initialement l'équipement afférent.

Autrement dit, selon l'invention, on stocke dans un réservoir de matériau de stockage thermique par chaleur sensible, le froid de la nuit pour une utilisation ultérieure (l'utilisation est préférentiellement faite pour le lendemain, mais une utilisation plusieurs jours plus tard est possible) sur quelques heures critiques où la forte température extérieure pénalise le fonctionnement de l'échangeur de chaleur, c'est-à-dire son rendement donc, en cascade, le rendement de la turbine. Du fait d'une différence de température entre le jour et la nuit qui est importante, le volume de stockage à mettre en œuvre, et donc le coût afférent est raisonnable.

Par conséquent, l'invention permet d'augmenter le rendement de conversion d'une installation de conversion de chaleur en électricité, lors de périodes de fortes voire très fortes chaleurs, avec un coût raisonnable.

L'invention peut être mise en œuvre avantageusement, dans des régions à très fortes chaleurs la journée, généralement des zones à climat aride, et à faibles températures la nuit.

Plus particulièrement, les zones potentielles d'implantation de centrales solaires CSP sont celles, notamment dans les climats arides semi désertiques à ciel majoritairement clair, dans lesquelles la différence de température entre jour et nuit est importante en toute saison.

Par exemple, dans la région de Ouarzazate, dans laquelle des construction de centrales solaires CSP ont été réalisées, on observe que l'écart moyen de température entre le jour et la nuit est de 15 à 20°C, et cet écart reste présent même les jours les plus chauds de l'année.

Selon l'invention, cet écart de température entre le jour et la nuit peut être mis à profit afin de stocker la fraîcheur de la nuit et de la restituer aux heures les plus chaudes de la journée à l'échangeur de chaleur refroidi à l'air ambiant qui serait installé sur le système de refroidissement d'une machine de conversion électrique, et plus généralement d'une machine de conversion de chaleur en énergie mécanique.

La fosse à réaliser pour constituer le réservoir de stockage du froid selon l'invention peut être réalisée lors de la construction d'une nouvelle installation sous le lieu d'implantation de l'échangeur de chaleur. Elle peut également être réalisée en dessous d'un échangeur de chaleur d'une installation existante. Ainsi, la mise en œuvre d'une fosse remplie de roche permet d'obtenir un stockage de volume important directement creusé dans le sol et aisé à remplir.

Le système de refroidissement selon l'invention se distingue clairement des techniques de puits canadien ou de sonde géothermique dans lesquelles le froid ou la chaleur est puisée directement dans le sol.

Le système de refroidissement selon l'invention peut aussi bien être réalisé lors de la réalisation d'une nouvelle centrale solaire CSP qu'être mis en œuvre dans une centrale existante dont le rendement est moindre par des fortes chaleurs, afin d'en améliorer ses performances.

Les avantages procurés par l'invention sont nombreux, et notamment ceux comme explicités ci-après.

Tout d'abord, grâce à l'invention, la démarche de dimensionnement d'un échangeur de chaleur, en particulier un aérocondenseur ou d'un aéroréfrigérant selon l'invention est différente de celle d'un appareil selon l'état de l'art. En effet, il n'est pas nécessaire de surdimensionner l'échangeur de chaleur, c'est-à-dire prévoir son fonctionnement nominal même pour des périodes de plus grandes chaleurs. Au lieu de cela, ces périodes sont prises en compte par le stockage du froid dans le matériau de stockage qui peut être restitué à un échangeur de chaleur de dimensionnement usuel, i.e. un échangeur de chaleur plus petit que s'il avait été dimensionné pour les fortes chaleurs. Le reste de l'année, le fonctionnement nominal est assuré par l'échangeur de chaleur usuel seul. Ceci implique une diminution de l'investissement et de la consommation électrique de l'installation.

Le système de refroidissement selon l'invention permet de compenser ce qu'un homme de l'art nomme usuellement des «écarts aux conditions de dimensionnement». Cela signifie, que tout en conservant le matériel déjà installé, l'implantation du moyen de stockage de froid selon l'invention permet d'augmenter les performances de l'échangeur de chaleur pour les périodes où il aurait été sous-dimensionné. Ces écarts aux conditions de dimensionnement peuvent être dus à différentes raisons et par exemple:
- lors de la conception de l'installation, des fichiers donnant la météorologie locale peuvent avoir sous-évalué la température extérieure réelle;
- d'année en année, du fait du réchauffement climatique global, il peut se produire une montée de la température extérieure non planifiée;
- une baisse observée des performances de l'échangeur de chaleur, qui peut être due par exemple à son encrassement;
- des changements dans les profils de demande électrique pour l'installation de conversion. Une demande accrue de climatisation en début d'après-midi conduit en effet à une consommation électrique plus importante durant cette période. Ainsi, pour un exploitant d'une centrale solaire CSP, il devient alors pertinent de produire plus spécifiquement à ces périodes de fortes températures extérieures pour lesquelles l'échangeur de chaleur n'a pas forcément été dimensionné.

Le système selon l'invention peut permettre de compenser une baisse des performances de l'échangeur de chaleur, sous l'effet de son encrassement par exemple. L'ajout d'un réservoir de stockage du froid conformément à l'invention permet de ne pas avoir à changer d'échangeur et/ou à rajouter des modules supplémentaires d'échange de chaleur au cours de la vie de l'installation.

En outre, le système selon l'invention autorise une certaine flexibilité d'utilisation en cas de changement de la machine de production électrique à cycle de Rankine. Ainsi, si le changement d'une machine induit un léger sous-dimensionnement de l'aérocondenseur/ aéroréfrigérant déjà en place, alors l'ajout d'un réservoir de stockage du froid conformément à l'invention peut permettre de compenser le sous-dimensionnement induit.

Enfin, le système selon l'invention est simple de mise en oeuvre et souple à utiliser, car le réservoir et son remplissage par le matériau de stockage est très facile à réaliser et son pilotage est aisé. En effet, il n'est pas nécessaire de contrôler précisément la circulation et le niveau hydraulique dans le réservoir de stockage, car on cherche uniquement à refroidir le réservoir la nuit et à utiliser ce froid durant la journée.

Selon un mode de réalisation particulièrement avantageux, le réservoir est un lit de roches. L'utilisation de roches en tant que matériau de stockage par chaleur sensible est avantageuse car simple et économique. On peut bien entendu utiliser un autre matériau, de préférence de faible coût. De préférence, pour le lit roches selon l'invention, chaque roche a individuellement une taille caractéristique de quelques centimètres, ce qui est un compromis satisfaisant entre le stockage thermique à réaliser et les pertes de charge induites. Ainsi, les roches ne doivent pas être trop grosses pour assurer un fonctionnement thermique correct et pas trop petites afin de limiter les pertes de charge induites par le lit de roches, ce qui permet de ne pas voir à dimensionner de trop gros ventilateurs lorsqu'on veut réaliser une convection forcée.

Selon une variante avantageuse, la fosse est en forme de pyramide tronquée avec la base agencée le plus profond dans le sol. Cette forme de pyramide tronquée permet avantageusement de réduire la profondeur de la fosse pour un même volume.

De préférence, il est prévu une grille de distribution fluidique agencée en dessous de la fosse, le(s) conduit(s) étant une (des) gaine(s) d'amenée de l'air extérieur en dessous de la grille de distribution. Une telle grille permet d'améliorer la distribution fluidique et donc la répartition homogène du stockage du froid.

Selon une variante, on peut prévoir ou plusieurs ventilateurs adaptés pour faire circuler de l'air extérieur dans la fosse par le(s) conduit(s). Ces ventilateurs sont agencés en entrée des bouches d'air en communication avec le stockage, qui peut être souterrain (fosse), afin de vaincre les pertes de charge liées au passage de l'air à travers le lit de roche. Ainsi, ces ventilateurs sont prévus pour que ceux qui sont intégrés à l'échangeur de chaleur (aérocondenseur ou l'aéroréfrigérant) n'aient pas à fournir de travail supplémentaire lors de la mise en communication avec le réservoir de stockage du froid. La puissance électrique consommée par les ventilateurs de circulation d'air extérieur dans la fosse est bien moindre que la perte de puissance d'une centrale solaire CSP lorsqu'il fait chaud. En effet, conformément à l'invention, ces ventilateurs sont prévus pour fonctionner la nuit pour charger le réservoir de stockage et la journée seulement pendant une période limitée, typiquement quelques heures, au déstockage du réservoir.

La mise en circulation de l'air extérieur peut également être envisagée par convection naturelle, ce qui représente un gain substantiel d'énergie. La ségrégation entre l'air chaud en haut et l'air froid en bas permet d'envisager techniquement ce type de solution.

Un dispositif de fermeture/ouverture du stockage permet de n'envoyer l'air froid stocké vers l'échangeur de chaleur qu'à partir d'une température seuil d'air extérieur prédéterminée.

Ainsi, de préférence, le système comprend au moins un premier volet rétractable entre une position fermée dans laquelle il ferme la fosse sur le dessus et une position ouverte dans laquelle il ouvre la fosse sur le dessus.

De préférence encore, il est prévu au moins un deuxième volet formant une jupe rétractable entre une position fermée dans laquelle elle guide l'air provenant de la fosse vers l'échangeur de chaleur et une position ouverte dans laquelle elle laisse dégagé l'espace entre la fosse et l'échangeur de chaleur.

Pour réaliser le réservoir de stockage en tant que tel, on peut réaliser avantageusement les étapes suivantes :
- excavation pour la réalisation de la fosse proprement dite;
- réalisation d'au moins un conduit latéral pour amener l'air extérieur jusqu'au-dessous de la fosse;
- le cas échéant, renforcement des parois au moyen de béton;
- le cas échéant, pose d'une grille de distribution fluidique en dessous de la fosse;
- remplissage de la fosse par un volume de roches;
- de préférence, mise en place des volets rétractables;
- de préférence, mise en place des ventilateurs de circulation d'air extérieur.
- le cas échéant, mise en place d'un système de drain en partie inférieure de la fosse de stockage et éventuellement d'une pompe de vidange pour la gestion et l'évacuation des eaux pluviales et/ou de l'humidité qui pourraient s'y accumuler.

L'invention a également pour objet un procédé de fonctionnement de l'installation qui vient d'être décrite, selon lequel on réalise les étapes suivantes :
i/ lors de la nuit, circulation d'air extérieur dans le réservoir de stockage thermique.
ii/ lors de la journée, en cas de température extérieure inférieure à une valeur seuil prédéterminée, isolation fluidique du réservoir,
iii/ lors de la journée, en cas de température extérieure supérieure à une valeur seuil prédéterminée, mise en circulation d'air extérieur à travers le réservoir puis alimentation de l'échangeur de chaleur en air ayant circulé dans le réservoir et donc refroidi au contact du matériau.

Lors de la phase de stockage i/, l'air extérieur refroidit le matériau de stockage par transfert convectif.

Lors de la phase de déstockage ii/, l'air chaud circulant depuis l'extérieur dans le réservoir de stockage est refroidi au contact du matériau et devient ainsi plus froid que l'air extérieur. Cet air plus froid alimente ainsi l'échangeur de chaleur, ce qui permet une augmentation de ses performances thermiques.

Selon une variante avantageuse, les étapes i/ et iii/ sont réalisées par convection forcée de l'air extérieur.

L'invention concerne également une centrale solaire thermodynamique (CSP), comprenant une installation décrite précédemment. Plus généralement, l'invention concerne, toute installation de production électrique par conversion de chaleur et qui fonctionne en pays chaud et dont le rendement est fonction de la température extérieure.

L'invention concerne enfin l'utilisation d'une installation décrite précédemment dans une région où l'écart de température extérieure entre la nuit et la journée est au moins égal à 10°C.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique générale d'une centrale solaire CSP déjà exploitée par la demanderesse;
- la figure 2 est une vue schématique simplifiée de la centrale CSP selon la figure 1 ;
- la figure 3 est une vue schématique du système de refroidissement du condenseur de machine thermique, selon l'état de l'art, tel que mis en œuvre dans la centrale CSP des figures 1 et 2;
- la figure 4 est une vue schématique d'un exemple de système de refroidissement du condenseur de machine thermique, selon l'invention;
- la figure 5 est une vue schématique simplifiée d'une centrale CSP avec le système de refroidissement selon l'invention;
- la figure 6 est un graphe indiquant les courbes caractéristiques de puissance délivrée par la centrale CSP selon l'état de l'art, illustrée aux figures 1 et 2, ces courbes ayant été réalisées au cours d'une journée d'automne ;
- la figure 7 est un graphe indiquant les courbes caractéristiques de puissance délivrée par la centrale CSP selon l'état de l'art, illustrée aux figures 1 et 2, ces courbes ayant été réalisées au cours d'une journée d'été et de grande chaleur ;
- la figure 8 est un histogramme comparatif de la production électrique d'une centrale CSP au cours d'une année, entre les données réelles d'une centrale CSP déjà exploitée par la demanderesse, i.e. avec un système de refroidissement classique et celles calculées de la même centrale CSP avec un système de refroidissement selon l'invention ;
- la figure 9 est une courbe montrant le gain possible en électricité produite avec un système de refroidissement selon l'invention en fonction du volume de stockage du froid pour l'aéroréfrigérant ;
- la figure 10 est une vue schématique d'un exemple avantageux de système de refroidissement du condenseur de machine thermique, selon l'invention.

Dans la description qui va suivre les termes « entrée », « sortie » « amont », « aval », sont utilisés par référence avec la direction de circulation des fluides au sein d'une installation selon l'invention.

Les termes « dessus », « dessous », « inférieur », « supérieur » sont quant à eux à considérer par référence à l'implantation dans le sol d'un réservoir de stockage de froid selon l'invention.

Par souci de clarté, les mêmes éléments dans une installation 3 selon l'état de l'art et une installation 3 selon l'invention sont désignés par les mêmes références numériques.

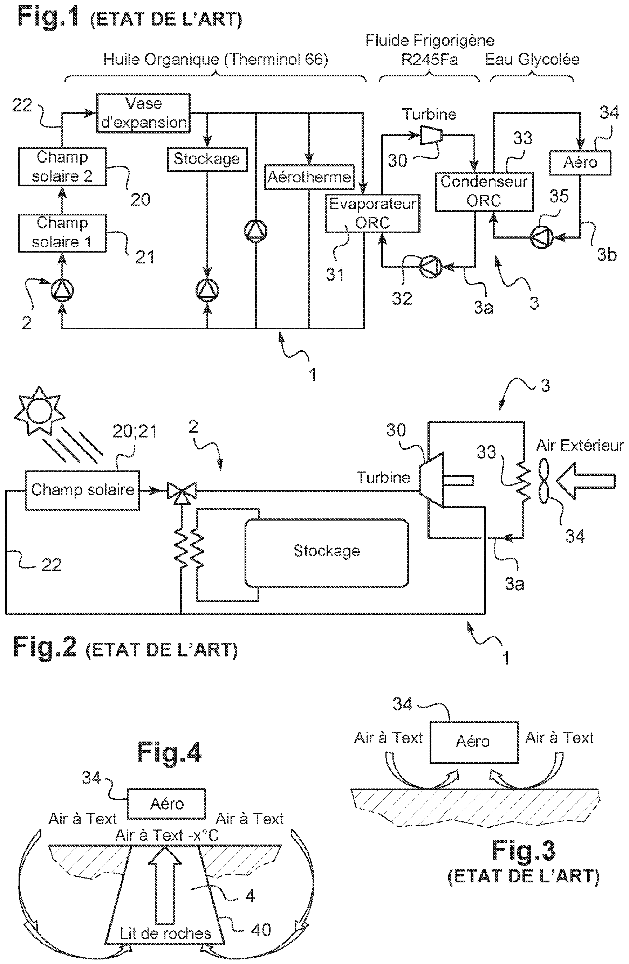

La centrale solaire thermodynamique (CSP) 1 qui est représentée schématiquement en figure 1 est une centrale prototype et est déjà exploitée par la demanderesse.

Nous ne décrirons pas ici en détail la partie 2 de la centrale 1 qui réalise la production de chaleur à proprement parler. En substance, cette partie 2 comprend deux groupes de pluralités de miroirs cylindro-paraboliques formant ce que l'on désigne usuellement des champs solaires 20, 21. Le fluide caloporteur, qui comme indiqué sur la figure 1 est de l'huile, circule dans un circuit 22 qui apporte son énergie à une installation 3 de conversion de la chaleur de l'huile en électricité qui concerne plus spécifiquement l'invention.

Plus précisément, la machine thermique 3 de conversion électrique est une machine fonctionnant selon un cycle thermodynamique dit Cycle Organique de Rankine (acronyme anglais ORC).

Cette machine 3 comprend tout d'abord un circuit principal 3a avec une turbine de détente 30 permettant la production électrique à partir de vapeur, un évaporateur 31 pour récupérer de la chaleur issue du circuit 22 et vaporiser le fluide de travail, qui est un fluide frigorigène dans l'exemple illustré de la figure 1, pour l'envoyer en amont vers la turbine 30 par l'intermédiaire d'une pompe 32 qui met en circulation le fluide de travail dans le circuit 3a.

Un condenseur 33 est prévu en aval de la turbine 30: sa fonction est d'évacuer, par condensation, l'énergie non transformée par la turbine 30.

La condensation est rendue possible dans le condenseur 33 par un circuit de refroidissement 3b dédié dans lequel circule un liquide de refroidissement, aussi appelé fluide de transfert, qui est de l'eau glycolée dans l'exemple illustré de la figure 1. L'eau glycolée est finalement refroidie au moyen d'un aéroréfrigérant sec 34 qui intègre un ventilateur lui amenant de l'air extérieur. La circulation du liquide de refroidissement dans le circuit 3b est assurée au moyen d'une pompe 35.

Au lieu d'avoir un circuit supplémentaire 3b avec un fluide de transfert dédié comme montré en figure 1, on peut aussi avoir un seul circuit de refroidissement 3a: le condenseur 33 et l'aéroréfrigérant 34 constituant alors un seul et même composant, qui est un aérocondenseur sec, dans lequel la vapeur provenant de la turbine de détente est directement condensée.

Après consultation des profils annuels typiques de température sur le site d'implantation de cette centrale 1 CSP et des besoins usuels de refroidissement de la machine thermique 3 ORC, l'aéroréfrigérant 34 a été dimensionné lors de la construction pour une puissance donnée à une température extérieure de 25°C. Les cas de température d'air extérieur de 30°C et 35°C ont été respectivement considérés comme peu fréquents et rares et n'ont donc pas été initialement retenus comme dimensionnant.

Or, finalement, comme ont pu le constater les inventeurs, le besoin de refroidissement de la machine thermique 3 ORC s'est avéré supérieur à celui initialement prévu et les occurrences de température d'air extérieur supérieur à 30°C plus importantes qu'envisagées.

Ainsi, de ce fait, il a été constaté que l'aéroréfrigérant 34 installé était sous-dimensionné pour les heures les plus chaudes en été, lorsque la machine thermique 3 ORC tourne à plein régime. Dans ce cas, la puissance évacuable sur l'aéroréfrigérant est diminuée, ce qui oblige à diminuer en conséquence la puissance amenée à l'évaporateur de la machine de conversion électrique. Ceci a pour conséquence contraignante d'obliger l'équipe exploitante à défocaliser certaines lignes de miroirs des champs solaires 20, 21, c'est-à-dire à changer leur orientation de sorte à ne pas concentrer les rayons de soleil sur ces parties de champ solaires 20, 21 aux périodes les plus chaudes. Cela conduit donc à dégrader le rendement de production électrique de la centrale 1 puisque le plein potentiel des champs solaires 20, 21 est pas rendu disponible à ces moments. La production électrique effective de la machine thermique 3 ORC est alors réduite en comparaison de la production électrique théorique maximale, cette dernière correspondant au maximum de la production électrique possible au vu de la seule ressource solaire disponible.

Pour répondre à cette problématique de perte de rendement de la centrale solaire 1 CSP aux heures très chaudes, qui est induite par la perte de rendement de l'aéroréfrigérant 34 directement alimenté par l'air extérieur, les inventeurs ont pensé à réaliser un réservoir de stockage du froid de la nuit dans un lit de roches 4, afin de le restituer à l'aéroréfrigérant 34 aux heures les plus chaudes.

Comme montré en figure 4, le lit de roches est réalisé dans une fosse 40 agencée en dessous de l'aéroréfrigérant 34 et qui est alimentée dans sa partie inférieure par de l'air extérieur par au moins un conduit latéral. Sur cette figure 4, la forme préférée de la fosse 40 est également montrée : la fosse 40 est en forme de pyramide tronquée avec la base agencée le plus profond dans le sol.

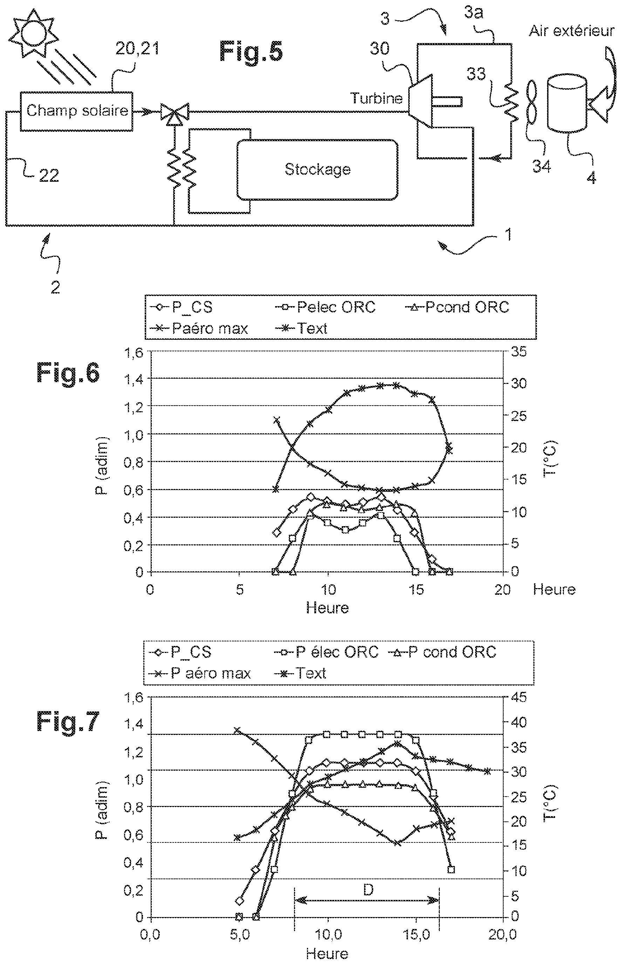

Les figures 6 et 7 illustrent deux situations typiques qui se sont produites respectivement pendant une journée en automne et pendant une journée en été sur le prototype de centrale solaire 1, tel qu'illustré en figures 1 et 2.

Sur ces figures, sont représentées les grandeurs suivantes:
- « Text » : température de l'air extérieur, en °C ;
- « P_CS » : puissance récupérable sur le champ solaire 20, 21 à un moment donné. Cette grandeur est indépendante du fonctionnement de la machine 3 ORC et de l'aéroréfrigérant 34;
- « Pelec ORC » : puissance électrique délivrée par la machine 3 ORC sur la base de P_CS et d'un aéroréfrigérant 34 non limité. Cette valeur correspond donc à la puissance électrique maximale qu'il est possible de générer à un moment donné;
- «P_{cond ORC}» : puissance qu'il est nécessaire de dissiper au condenseur 33 de la machine 3 ORC lorsque celle-ci est alimentée avec P_CS à son évaporateur 31 ;
- « Paéro max » : puissance maximale de l'aéroréfrigérant 34 en fonction des conditions de température extérieure.

On précise ici que les puissances indiquées « P_CS », Paéro max et «P_{cond ORC}» ont été adimensionnées avec la valeur de la puissance maximale théorique récupérable sur le champ solaire 20, 21. La puissance « Pélec ORC » a quant à elle été adimensionnée avec la valeur de la puissance électrique théorique maximale produite par la machine 3 ORC.

Comme on peut le voir sur la figure 6, pour la journée en automne, la température de l'air extérieur était de 28°C environ et l'aéroréfrigérant 34 fonctionnait déjà en régime dégradé, ce qui correspond à la puissance maximale diminuée. Toutefois, la puissance amenée à la machine 3 ORC et provenant des champs solaires 20, 21 est relativement moyenne, si bien que le besoin de refroidissement de la machine 3 ORC (Pcond ORC) est inférieur aux capacités de l'aéroréfrigérant34 (Paéromax). Dans ces conditions, il n'y a pas besoin d'utiliser le stockage du froid comme selon l'invention.

Au contraire, comme montré en figure 7, durant la journée d'été, la température extérieure dépasse les 35°C en milieu de journée et la puissance amenée à la machine 3 approche la valeur nominale. Dans ces conditions, l'aéroréfrigérant 34 qui a été initialement installé et qui est alimenté directement par l'air extérieur est clairement insuffisant pour répondre aux besoins de refroidissement de la machine 3, car Paéromax<PcondORC. Autrement dit, pendant la période D représentée en figure 7, la puissance qui peut être évacuée par le condenseur 33 est inférieure à la puissance effectivement requise, en raison des températures trop élevées. Comme déjà évoqué, la seule solution actuelle pour éviter l'arrêt de la machine 3 suite à un refroidissement insuffisant du condenseur 33 est de défocaliser les miroirs des champs solaires 20, 21 pour diminuer l'apport de chaleur Pcs à la machine 3. De ce fait, on constate que la production électrique effective tombe alors à 59% de la production électrique potentielle.

L'ajout d'un volume de stockage froid selon l'invention permet de diminuer la température d'air en entrée d'aéroréfrigérant 34 pendant les heures les plus chaudes et d'augmenter les performances de l'aéroréfrigérant 34.

Pour prouver l'efficacité du stockage du froid et sa restitution à l'aéroréfrigérant 34 conformément à l'invention, les inventeurs ont réalisé des calculs avec les hypothèses suivantes:
- capacité de stockage des roches : ρ^{∗}Cp=2500^{∗}900 en J/m³.K;
- écart de température entre le jour et la nuit de 15°C environ pendant 10 h de nuit. Ces valeurs sont issues de fichiers de mesure météorologiques réalisées par la demanderesse sur le site d'installation de la centrale. Il est donc considéré que le lit de roches 4 peut être refroidi la nuit jusqu'à une température 15°C inférieure à la température maximale de la journée;
- la mise en service du stockage du froid depuis le lit de roches 4 est asservie à une température limite prédéterminée de l'air extérieur et une prévision de la performance des champs solaires 20, 21. En dessous d'une température d'air extérieur inférieure à cette valeur limite prédéterminée, la restitution du froid stocké dans le lit de roches 4 n'est pas mise en route. Au-dessus de cette valeur prédéterminée limite, la restitution est mise en route, c'est-à-dire l'air alimentant l'aéroréfrigérant 34 circule depuis l'extérieur et est refroidi en traversant le volume 4.

Les inventeurs ont ainsi calculé que, pour une journée d'été comme celle illustrée en figure 7, un volume de 107 m³ de roches 4 pour stocker le froid permet de remonter la production électrique effective à 82% de la production électrique potentielle, tandis qu'un volume de 200 m³ permet de la faire remonter à 92 % et un volume de 300 m³ permet de la faire remonter à 100%.

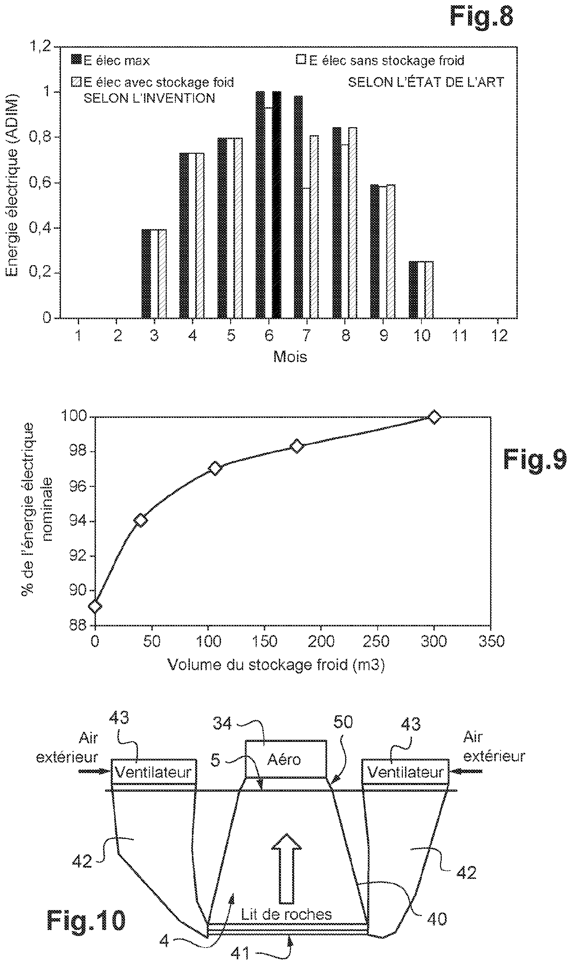

La figure 8 montre sous la forme d'un histogramme comparatif la production électrique sur le prototype de centrale 1 CSP respectivement tel qu'actuellement (état de l'art) et avec un volume de roches 4 en tant que stockage du froid de 107m³. Sur cette figure 8, les grandeurs suivantes sont représentées:
- « E élec max » qui correspond à la production électrique maximale possible pendant une période donnée (ici mensuellement). Elle est calculée à partir de la puissance amenée par les champs solaires 20, 21 et sans limitation de la puissance de l'aéroréfrigérant 34;
- « E élec sans stockage froid » qui correspond à la production électrique effective issue de la machine 3 ORC pendant une période donnée (ici mensuellement). Il n'y a pas de stockage du froid comme selon l'invention et les performances de l'aéroréfrigérant 34 sont donc uniquement liées à Text;
- « E élec avec stockage froid » qui correspond à la production électrique effective issue de la machine 3 ORC pendant une période donnée (ici mensuellement) avec le volume de roches pour le stockage du froid de l'ordre de 107m³.

On précise que les énergies électriques présentées en figure 8 ont été adimensionnée avec la valeur mensuelle maximale de l'énergie électrique produite mensuellement.

Il ressort de cette figure 8, que le stockage du froid dans le lit de roches 4 et sa restitution montre un intérêt pour les mois de juin, juillet, aout et septembre, correspondant respectivement aux mois indiqués 6, 7, 8 et 9 sur la figure 8.

Globalement, sans volume de stockage du froid, la production électrique annuelle est égale à 89% de la production électrique annuelle maximale.

Avec un volume 4 de stockage froid de 107m³ selon l'invention, cette valeur remonte à 96%.

La figure 9 présente l'évolution de la production électrique annuelle en fonction du volume 4 de roches que l'on dédie au stockage du froid selon l'invention.

Un volume 4 de 300m³ environ permet de remonter à 100% de la production électrique maximale.

Un optimum technico-économique est à définir entre le volume 4 de stockage du froid et le gain en production électrique. En général, un dimensionnement au point le plus haut n'est pas à considérer, c'est-à-dire que le dimensionnement accepte que le système soit sous-dimensionné pour quelques heures annuelles de température extrêmes. Dans le cas du prototype de centrale 1, illustré en figure 1 un volume de 107m³ semble être un bon compromis. Ce dimensionnement est alors réalisé pour un jour typique de grande chaleur, mais pas de chaleur extrême. Dans ce derniers cas, l'installation 3 fonctionnera en régime dégradé, mais tout de même moins dégradé qu'en l'absence de volume 4 de stockage du froid.

Comme montrée en figure 4, une implantation avantageuse de la fosse 40 remplie de roches 4 a été calculée pour le prototype de centrale CSP 1.

Selon ces calculs, le lit de roches 4 est positionné dans une fosse 40 ayant une forme de pyramide tronquée dont la section du haut est de 7,6 m² et la section de la base est de 11,38 m². La hauteur du lit de roches 4 est de 11,4 m environ.

On a représenté également en figure 10 un exemple avantageux de réservoir 4 de stockage du froid à partir de roches remplissant une fosse 40 ayant la même forme tronquée vers le haut de la figure 4.

Dans cet exemple, on prévoit avantageusement une grille de distribution 41 en dessous de la fosse 40 afin d'améliorer la distribution fluidique à travers les roches et donc l'améliorer le comportement thermique du stockage.

Dans cet exemple également, on prévoit un premier volet 5 rétractable entre une position fermée dans laquelle il ferme la fosse 40 sur le dessus et une position ouverte dans laquelle il ouvre la fosse sur le dessus.

En outre, on prévoit au moins un deuxième volet 50 formant une jupe rétractable entre une position fermée dans laquelle elle guide l'air provenant de la fosse 40 vers l'aéroréfrigérant 4 et une position ouverte dans laquelle elle laisse dégagé l'espace entre la fosse 4 et l'aéroréfrigérant 34. Ainsi, ce système de volet 5 et jupe 50 rétractables permet d'isoler le réservoir 4 de l'aéroréfrigérant 34 ou au contraire de les connecter entre eux.

Enfin, on prévoit avantageusement au moins un, de préférence plusieurs ventilateurs 43 qui assure(nt) la circulation de l'air extérieur dans le lit de roche 4 de bas en haut. Différentes implantations du (des) ventilateurs sont envisageables: il(s) peu(ven)t être par exemple positionnés comme illustré en figure 10, c'est-à-dire à l'air libre ou bien enterrés.

Dans cet exemple avantageux, les modes de fonctionnement de l'aéroréfrigérant 34 sont typiquement les suivants :
1. Fonctionnement de l'aéroréfrigérant 34 en cas de température extérieure inférieure à la valeur limite prédéterminée:
   a. ventilateur de circulation 43 éteints ;
   b. volet 5 et jupe 50 en configuration pour isoler le volume 4 et permettre à l'aéroréfrigérant 34 de pomper directement de l'air extérieur
2. Charge nocturne du volume 4 de stockage en froid :
   a. Ouverture du volet rétractable 5 pour permettre à l'air de circuler dans le lit de roches 4.
   b. Mise en route des ventilateurs 43 qui génèrent une circulation de l'air depuis l'extérieur à travers le lit de roches 4 de bas en haut. A l'issue de cette étape 2.b/, le stockage froid est plein. Dans cette étape 2.b/, la vitesse de l'air est typiquement de quelques cm par seconde. La charge est typiquement arrêtée lorsque le réservoir de stockage est plein, ce qui peut être aisément réalisé au moyen d'une instrumentation simple de mesure de température dans le réservoir (type thermocouple par exemple). Par exemple, lorsque la mesure de température en haut du réservoir atteint une valeur consigne pré-déterminée, le réservoir peut être considéré comme plein.
3. Décharge diurne du volume froid dans le lit de roches 4 dans l'aéroréfrigérant 34 en cas de température extérieure supérieure à la valeur limite prédéterminée :
   a. Volet 5 et jupe 50 en configuration pour connexion du volume 4 à l'aéroréfrigérant 34
   b. Mise en route des ventilateurs 43.

Il va de soi que lors des étapes 1. et 3, l'aéroréfrigérant 34 fonctionne car la centrale CSP est en fonctionnement, c'est-à-dire produit de l'électricité par la turbine dont il faut évacuer la chaleur.

Entre les étapes 2 et 3, il est possible de laisser un temps de stand-by de quelques jours, s'il n'y a pas besoin d'utiliser le stockage du volume froid 4.

Les inventeurs ont aussi étudié le cas d'une centrale solaire CSP de taille commerciale qui serait installée au Maroc sur le site de Ouarzazate pour mettre en évidence l'efficacité de la solution selon l'invention.

Pour ce cas d'étude, une machine 3 ORC de 5 MWe a été considérée. Cette machine ORC est similaire à une machine commercialisée sous la dénomination «Turboden 55HRS ». En particulier, il été considéré une « température de coupure » de 40°C, c'est-à-dire que cela revient à considérer que la machine 3 ORC ne fonctionne pas lorsque la température extérieure dépasse 40°C.

D'après la publication [1], l'aéroréfrigérant est classiquement dimensionné de telle façon que les 1% des heures les plus chaudes de l'année ne sont pas prises en compte, c'est-à-dire que l'aéroréfrigérant est sous-dimensionné pour ces 1% d'heures les plus chaudes et que la centrale fonctionnera forcément en régime dégradé à ces heures. Dans le cas d'étude ici considéré, cela correspond à peu près à un dimensionnement pour une température extérieure de 35°C.

Pour montrer l'intérêt de l'invention, un cas particulier avec aéroréfrigérant dimensionné en fonctionnement nominal pour une température d'air extérieur de 35°C a été considéré. Dès que la température extérieure dépasse les 35°C, les performances de l'aéroréfrigérant sont dégradées et la production électrique est réduite.

Les calculs ont été faits pour le cas particulier d'une journée de très forte chaleur, même si elle ne peut pas être considérée comme une journée de chaleur exceptionnelle.

Pour cette journée, la production électrique effective chute à 36% de la production électrique maximale en raison d'un arrêt de la machine 3 dû aux températures extérieures trop élevées.

En profitant d'un écart de 15°C entre le jour et la nuit pendant une durée de nuit de 8-10 h, l'intégration d'un volume 4 de 5300 m³ pour le stockage du froid de la nuit, permet de ramener la production électrique effective à près de 95% de la production maximale.

Une même analyse a été réalisée sur une journée caractérisée par des températures maximales plus faibles. Pour cette journée, les performances dégradées de l'aéroréfrigérant conduisent à une dégradation de la production électrique. L'ajout d'un volume 4 de stockage froid de 2000 m³ permet de remonter la production électrique de 84% à 100% de la production maximale.

Dans ce cas d'étude, il apparait donc que l'aéroréfrigérant peut, s'il est couplé avec un réservoir 4 de stockage du froid de volume suffisant, être dimensionné pour une température extérieure maximale plus faible, ce qui induit une réduction significative de taille et donc de coût.

Dans ce cas d'étude, le lit de roches 4 a un volume utile de l'ordre de 5300 m³, soit une fosse cylindrique 40 de surface correspondant à celle des aérothermes et de 9 m de hauteur environ. On précise à nouveau que ce calcul est basé sur des données techniques du constructeur d'aéroréfrigérant faisant suite à des consultations par les inventeurs pour des aéroréfrigérants pour une centrale CSP de même taille que celle considérée dans cet exemple.

Le passage d'un écart de température entre jour et nuit de 15°C à 20°C permet de réduire les volumes 4 précédents de stockage du froid respectivement de 5000 m³ à 3700m³ et de 2000 m³ à 1500 m³.

Bien que décrite en relation avec une centrale solaire CSP, l'invention peut être appliquée à toute installation de conversion de chaleur en électricité et plus généralement à toute installation de conversion de chaleur en énergie mécanique. Par exemple, on peut envisager d'appliquer l'invention à un capteur solaire de forme parabolique au foyer duquel est placé un moteur de type Stirling, le système de refroidissement de l'invention permettant de refroidir le fluide de travail du moteur aux heures les plus chaudes et donc d'augmenter son rendement. Un autre exemple serait l'intégration de l'invention pour le refroidissement de cellules photovoltaïques d'une centrale solaire de type CPV (à concentration photovoltaïques) dont les systèmes de refroidissement sont soumis aux mêmes contraintes que ceux des centrales solaires de type CSP.D'autres variantes et améliorations peuvent être prévues sans pour autant sortir du cadre de l'invention.

Ainsi, si le matériau de stockage préféré pour l'application de l'invention à une centrale solaire est un lit de roches car les roches peuvent être présentes in situ sur le lieu de la centrale et ce de manière abondante, d'autres matériaux de stockage par chaleur sensible peuvent convenir. De manière générale, on envisagera des matériaux peu chers et disponibles, tels que des rebuts de céramiques, de briques, de roulement à billes usagés.

L'invention n'est pas limitée aux exemples qui viennent d'être décrits ; on peut notamment combiner entre elles des caractéristiques des exemples illustrés au sein de variantes non illustrées.

L'expression « comportant un » doit être comprise comme étant synonyme de « comportant au moins un », sauf si le contraire est spécifié.

### Références citées

[1]: Kevin Damerau and al. « Costs of reducing water use of concentrating solar power to sustainable levels: Scenarios for North Africa », Energy Policy, 2011
*[2]:* «Comparison of alternate cooling technologies for california power plants, Economies, environmental and other tradeoffs», California Energy Commission, Février 2002
[3]: « Realising the potential of concentrating solar power in Australia », IT power, Mai 2012
[4]: C. Martin and al. « Novel Dry Cooling Technology for Power Plants », SunShot Concentrating Solar Program Review 2013
[5] : V.Gadhamshetty and al. « Improving Air-Cooled Condenser Performance in Combined Cycle Power Plants », Journal of Energy Engineering ASCE, Août 2006
[6] : Lorenzo Pistocchini and al. « Feasability Study of an Innovative Dry-Cooling System with Phase-Change Material Storage for CSP Multi-MW Size Power Plant », Journal of Solar Energy Engineering, Août 2011

## Revendications

1. Installation de conversion de chaleur en énergie mécanique comprenant :
- une machine thermique (3) apte à faire subir à un fluide de travail un cycle thermodynamique, la machine thermique comprenant une turbine de détente de vapeur de fluide de travail ;
- un système de refroidissement de la vapeur détendue du fluide de travail de la machine thermique, comprenant un aérocondenseur (33) et/ou un aéroréfrigérant (34) et un réservoir de matériau de stockage thermique par chaleur sensible (31), en tant que moyen de stockage du froid pour l'aérocondenseur et/ou l'aéroréfrigérant, le réservoir étant apte à être mis en communication avec l'air extérieur lors des heures où la température extérieure est la plus froide afin de stocker le froid de l'air extérieur par circulation de ce dernier au travers du matériau de stockage, **caractérisée en ce que** le réservoir est réalisé sous la forme d'une fosse (40) dans le sol agencée en dessous de l'échangeur de chaleur, la fosse étant reliée à l'air extérieur par au moins un conduit.

2. Installation selon la revendication 1, la machine thermique étant une machine à cycle organique de Rankine (ORC).

3. Installation selon l'une des revendications 1 ou 2, le réservoir étant un lit de roches (4).

4. Installation selon l'une des revendications précédentes, la fosse étant en forme de pyramide tronquée avec la base agencée le plus profond dans le sol.

5. Installation selon l'une des revendications précédentes, comprenant une grille de distribution fluidique (41) agencée en dessous de la fosse, le(s) conduit(s) étant une (des) gaine(s) d'amenée de l'air extérieur en dessous de la grille de distribution.

6. Installation selon l'une des revendications précédentes, comprenant un ou plusieurs ventilateurs adaptés pour faire circuler de l'air extérieur dans la fosse par le(s) conduit(s).

7. Installation selon l'une des revendications précédentes, comprenant au moins un premier volet rétractable (5) entre une position fermée dans laquelle il ferme la fosse sur le dessus et une position ouverte dans laquelle il ouvre la fosse sur le dessus.

8. Installation selon l'une des revendications précédentes, comprenant au moins un deuxième volet (50) formant une jupe rétractable entre une position fermée dans laquelle elle guide l'air provenant de la fosse vers l'échangeur de chaleur et une position ouverte dans laquelle elle laisse dégagé l'espace entre la fosse l'échangeur de chaleur.

9. Centrale solaire (1) thermodynamique (CSP), comprenant une installation selon l'une quelconque des revendications 1 à 8.

10. Utilisation d'une installation selon l'une quelconque des revendications 1 à 9 dans une région où l'écart de température extérieure entre la nuit et la journée est au moins égal à 10°C.

## Patentansprüche

1. Anlage zur Umwandlung von Wärme in mechanische Energie, umfassend
- eine thermische Maschine (3), die geeignet ist, ein Arbeitsfluid einem thermodynamischen Zyklus zu unterziehen, wobei die thermische Maschine eine Entspannungsturbine zum Entspannen von Arbeitsfluiddampf umfasst;
- ein Kühlsystem zum Kühlen des entspannten Dampfes des Arbeitsfluids der thermischen Maschine, umfassend einen Luftkondensator (33) und/oder einen Luftkühler (34) und einen Behälter mit Material zur sensiblen Wärmespeicherung (31) als Speichereinrichtung zum Speichern der Kälte für den Luftkondensator und/oder den Luftkühler, wobei der Behälter geeignet ist, zu Zeiten, in denen die Außentemperatur am niedrigsten ist, mit der Außenluft in Verbindung gebracht zu werden, um die Kälte der Außenluft durch deren Zirkulation durch das Speichermaterial hindurch zu speichern, **dadurch gekennzeichnet, dass** der Behälter in Form einer Grube (40) im Boden ausgeführt ist, die unter dem Wärmetauscher angeordnet ist, wobei die Grube über mindestens eine Leitung mit der Außenluft verbunden ist.

2. Anlage nach Anspruch 1, wobei die thermische Maschine eine Maschine mit Organic Rankine Cycle (ORC) ist.

3. Anlage nach einem der Ansprüche 1 oder 2, wobei der Behälter ein Gesteinsbett (4) ist.

4. Anlage nach einem der vorhergehenden Ansprüche, wobei die Grube die Form eines Pyramidenstumpfes hat, dessen Grundseite am tiefsten im Boden angeordnet ist.

5. Anlage nach einem der vorhergehenden Ansprüche, umfassend ein Fluidverteilungsgitter (41), das unter der Grube angeordnet ist, wobei die Leitung(en) ein (mehrere) Zuführrohr(e) zum Zuführen von Außenluft unter das Verteilungsgitter ist(sind).

6. Anlage nach einem der vorhergehenden Ansprüche, umfassend ein oder mehrere Gebläse, die geeignet sind, Außenluft durch die Leitung(en) in der Grube zirkulieren zu lassen.

7. Anlage nach einem der vorhergehenden Ansprüche, umfassend mindestens eine erste Klappe (5), die zwischen einer geschlossenen Stellung, in der sie die Grube an der Oberseite verschließt, und einer geöffneten Stellung, in der sie die Grube an der Oberseite öffnet, einziehbar ist.

8. Anlage nach einem der vorhergehenden Ansprüche, umfassend mindestens eine zweite, eine Schürze bildende Klappe (50), die zwischen einer geschlossenen Stellung, in der sie aus der Grube kommende Luft zum Wärmetauscher führt, und einer geöffneten Stellung, in der sie den Raum zwischen der Grube und Wärmetauscher frei lässt, einziehbar ist.

9. Thermodynamisches Solarkraftwerk (CSP) (1) mit einer Anlage nach einem der Ansprüche 1 bis 8.

10. Verwendung einer Anlage nach einem der Ansprüche 1 bis 9 in einer Region, in der die Außentemperaturdifferenz zwischen Nacht und Tag mindestens 10 °C beträgt.

## Claims

1. An installation for converting heat into mechanical energy comprising:
- a thermal machine (3) capable of subjecting a working fluid to a thermodynamic cycle, the thermal machine comprising a working fluid vapor expansion turbine,
- a cooling system for the expanded vapor of the working fluid of the thermal machine, comprising an air condenser (33) and/or a cooling tower(33) and a reservoir of sensible heat thermal storage material (31), as cold storage means for the air condenser and/or the cooling tower, the reservoir being able to be connected with the outside air in the hours when the outside temperature is coldest in order to store the cold of the outside air by circulation thereof through the storage material,
**characterized in that** the reservoir is produced in the form of a pit (40) in the ground arranged below the heat exchanger, the pit being linked to the outside air by at least one duct.

2. The installation as claimed in claim 1, the thermal machine being an Organic Rankine cycle (ORC) machine.

3. The installation as claimed in one of claims 1 or 2, the reservoir being a bed of rocks (4).

4. The installation as claimed in one of the preceding claims, the pit being in truncated pyramid form with the base arranged deepest in the ground.

5. The installation as claimed in one of the preceding claims, comprising a fluid distribution grating (41) arranged below the pit, the duct(s) being one or more shaft(s) bringing outside air below the distribution grating.

6. The installation as claimed in one of the preceding claims, comprising one or more fans suitable for circulating outside air in the pit via the duct(s).

7. The installation as claimed in one of the preceding claims, comprising at least one first shutter (5) that is retractable between a closed position in which it closes the pit at the top and an open position in which it opens the pit at the top.

8. The installation as claimed in one of the preceding claims, comprising at least one second shutter (50) forming a skirt that is retractable between a closed position in which it guides the air from the pit to the heat exchanger and an open position in which it leaves the space between the pit and the heat exchanger clear.

9. A concentrating solar power (CSP) plant (1), comprising an installation as claimed in any one of claims 1 to 8.

10. The use of an installation as claimed in any one of claims 1 to 9 in a region where the outside temperature difference between nighttime and daytime is at least equal to 10°C.
